# FASCICULE DE BREVET EUROPEEN

(11) **EP 1 617 172 B1**
(45) Date de publication et mention de la délivrance du brevet: **26.12.2007**
(21) Numéro de dépôt: 04103417.4
(22) Date de dépôt: 16.07.2004
(51) Int. Cl.: G01B 5/012, G01B 7/012, G01B 11/00, G01B 21/04

(54) **Palpeur orientable**
Lenkbarer Taststift
Steerable feeler head

(43) Date de publication de la demande: 18.01.2006
(73) Titulaire: TESA SA, 1020 Renens (CH)
(72) Inventeur: Rouge, Claude, 1446, Balmes (CH); Jordil, Pascal, 1612, Ecoteaux (CH)
(74) Mandataire: P&TS Patents & Technology Surveys SA

(56) Documents cités:
- EP-A- 0 392 660
- US-A- 4 888 877
- US-A1- 2001 025 427

## Description

### Domaine technique

La présente invention concerne un palpeur pour mesurer des coordonnées tridimensionnelles d'une pièce mécanique et notamment, mais pas uniquement, un palpeur orientable destiné à être utilisé sur une machine à mesurer des coordonnées manuelle ou automatique.

### Etat de la technique

Les palpeurs à déclenchement sont des instruments de mesure utilisés par exemple sur des lignes de production de pièces mécaniques, pour la vérification des dimensions ou des surfaces des pièces usinées. Les palpeurs à déclenchement sont aussi utilisés pour capturer la forme tridimensionnelle de pièces complexes, afin par exemple de les reproduire ou de les modéliser.

En général les palpeurs comprennent une partie fixe, destinée à être fixée sur un bras d'une machine à mesurer et une touche mobile, comprenant une sphère au bout d'une tige allongée et destinée à être amenée en contact avec la pièce à mesurer.

Dans la plupart des applications les palpeurs à déclenchement sont fixés sur le bras mobile d'une machine dont la position dans l'espace est déterminable précisément à l'aide d'un système de mesure manuel ou automatique, par exemple des encodeurs de position disposés sur les axes de la machine. Le bras mobile est déplacé dans l'espace pour amener la touche de mesure du palpeur en contact avec la pièce ou la surface à mesurer. Lors du contact une force de déflection est alors appliquée sur la touche, la sortant de sa position initiale de repos. Un capteur réagit au moindre déplacement de la touche générant un signal électrique qui est envoyé soit à l'utilisateur, sous forme de signal lumineux, soit au logiciel de contrôle de la machine qui détermine ainsi à l'aide des données du système de mesure les cordonnées du point de contact dans un référentiel donné. A ce but on utilise dans l'art antérieur des capteurs électromécaniques ou optiques ou des capteurs de déplacement basés sur des principes différents, par exemple des capteurs comprenant des jauges de contrainte.

Dans le cas d'un palpeur à déclenchement tridimensionnel, la liaison entre la touche et la partie fixe du palpeur est habituellement réalisée selon le principe de la liaison de Boys, soit par exemple par trois goupilles cylindriques reposant sur six sphères de façon à définir six points de contact entre l'organe fixe et la touche. On connaît toutefois aussi des touches bi- et unidimensionnelles.

Lorsque le palpeur est utilisé pour la mesure de pièces de forme complexe, présentant des cavités et des protubérances, il est malaisé ou impossible d'amener la touche en contact avec toute la surface de la pièce sans que la partie fixe du palpeur ou la tige de la touche interfèrent avec des éléments de la pièce à mesurer. Pour pallier cet inconvénient, on connaît des palpeurs permettant d'orienter la touche de contact dans une pluralité de directions dans l'espace. En général deux axes indépendants de rotation sont requis pour couvrir l'ensemble des orientations possibles. Un palpeur de ce type est décrit dans la demande de brevet européen EP0392660.

L'utilisation de ce type de dispositifs n'est toutefois pas limitée aux touches de contact et on peut aussi les employer avec des capteurs sans contact, par exemple des caméras vidéo, pour inspecter et contrôler des pièces usinées, par exemple.

De préférence les axes de rotation sont indexés, dans le sens qu'ils prévoient un nombre suffisamment grand mais fini de positions de repos prédéterminées et exactement reproductibles. Cette disposition évite de devoir calibrer à nouveau la machine à mesurer après chaque changement de l'orientation de la touche.

Le brevet US4888 877 décrit une tête de mesure orientable comprenant une touche de palpage inclinée, laquelle peut tourner autour de deux axes orthogonaux. Les déplacements angulaires autour de ces axes sont déterminés par des servomoteurs et mesuré par des encodeurs d'angle.

La demande de brevet US2001025427 porte sur une touche de palpage orientable autour de deux axes orthogonaux par un dispositif articulé ayant deux connexions rotatives. Un modèle mathématique est mis en place pour corriger les déformations élastiques du dispositif articulé.

Le brevet Européen EP0392660 décrit une tête de palpage portant une touche de palpage de forme allongée, laquelle peut être tournée manuellement autour de deux axes orthogonaux

Une limitation des palpeurs orientables connus est que le dispositif d'orientation du palpeur comporte toujours une augmentation de la dimension du palpeur, par rapport à un palpeur non orientable. De ce fait la course utile de la machine à mesurer dans les trois axes de coordonnés, et notamment dans l'axe Z, se retrouve réduite.

En particulier, il est difficile de mesurer des coordonnées de points proches des fins de course de la machine à mesurer, ou dans des pièces de forme complexe, en raison de l'encombrement du palpeur lui-même.

### Divulgation de l'invention

Un but de la présente invention est de proposer un palpeur exempt des inconvénients de l'art antérieur et, en particulier, d'éviter les limitations liées à l'encombrement des palpeurs orientables connus.

Ces buts sont atteints par le palpeur orientable selon la revendication principale.

### Brève description des dessins

La présente invention sera mieux comprise à la lecture de la description donnée à titre d'exemple et illustrée par les figures annexées dans lesquelles :
La figure 1 représente une vue d'un palpeur orientable selon l'invention ;
Les figures 2, 3 et 4 représentent respectivement une première, seconde et troisième position du palpeur de la figure 1 ;
La figure 5 représente une variante d'exécution du palpeur de l'invention.

Les figures 6, 7 et 8 représentent trois configurations du palpeur de la figure 1.

### Mode(s) de réalisation de l'invention

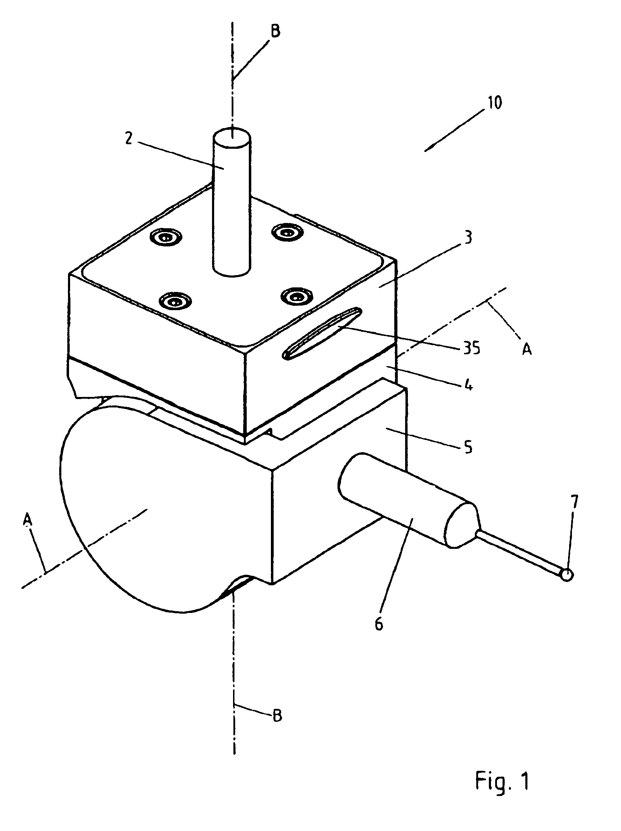

Avec référence à la figure 1, un palpeur orientable 10 selon l'invention comprend un support 3 destiné à être fixé sur le bras d'une machine à mesurer, capable de se mouvoir, par exemple selon trois axes de coordonnées X, Y et Z à l'intérieur d'un volume de mesure. La fixation peut être effectuée, par exemple, par la tige 2, ou par n'importe quel autre moyen de fixation.

Dans la suite on utilisera, par souci de simplicité, la désignation « vertical » pour se référer à l'orientation de l'axe B sur la figure 1. Cette désignation se réfère à l'orientation conventionnelle des figures et aussi à l'orientation dans laquelle le dispositif de l'invention est normalement utilisé et coïncide, habituellement, avec la direction de l'axe vertical Z de la machine à mesurer sur laquelle le palpeur est monté. Cependant le palpeur peut être employé avec n'importe quelle orientation dans l'espace.

Un premier élément mobile 4 est fixé au support 3, de manière à pouvoir tourner autour de l'axe vertical B. Le premier élément mobile 4 peut, de préférence, assumer une pluralité de positions indexées, correspondantes à des multiples d'un petit angle prédéterminé, par exemple 10 degrés. De manière connue ces positions indexées sont déterminées par exemple par une liaison isostatique définissant six points d'appui entre des éléments de positionnement dont la position est déterminée avec une grande précision.

Dans une variante de l'invention la rotation de l'élément mobile 4 n'est pas indexée, et peut assumer n'importe quelle valeur d'angle, avec continuité.

La rotation du premier élément mobile 4 peut être assurée par des actuateurs électromécaniques, par exemple des moteurs à courant continu ou des moteurs pas à pas ou par n'importe quel moyen d'actionnement. La rotation peut aussi être manuelle, par l'intervention d'un opérateur.

Dans une variante de l'invention un encodeur d'angle permet la lecture de l'angle de rotation autour de l'axe B. De préférence l'encodeur et le moteur sont reliés et forment un servomoteur.

Le second élément mobile 5 est libre de tourner autour de l'axe horizontal A, solidaire du premier élément mobile 4. La rotation du second élément mobile 5 autour de l'axe A peut être continue ou indexée, motorisée ou manuelle, comme pour le premier élément mobile 4 ci-dessus.

Préférablement la rotation du second élément mobile 5 selon l'axe A couvre une plage angulaire supérieure à 90 degrés, plus préférablement une plage angulaire supérieure à 120 degrés, plus préférablement une plage angulaire non inférieure à 180 degrés.

Une touche de palpage 6 est fixée au second élément mobile 5 et porte, à son extrémité, une sphère 7 destinée à entrer en contact avec la pièce à mesurer. Un mécanisme de détection, non représenté, répond alors au moindre déplacement de la sphère 7 avec un signal électrique qui est envoyé soit au voyant lumineux 35, soit au logiciel de contrôle de la machine, par un connecteur non représenté.

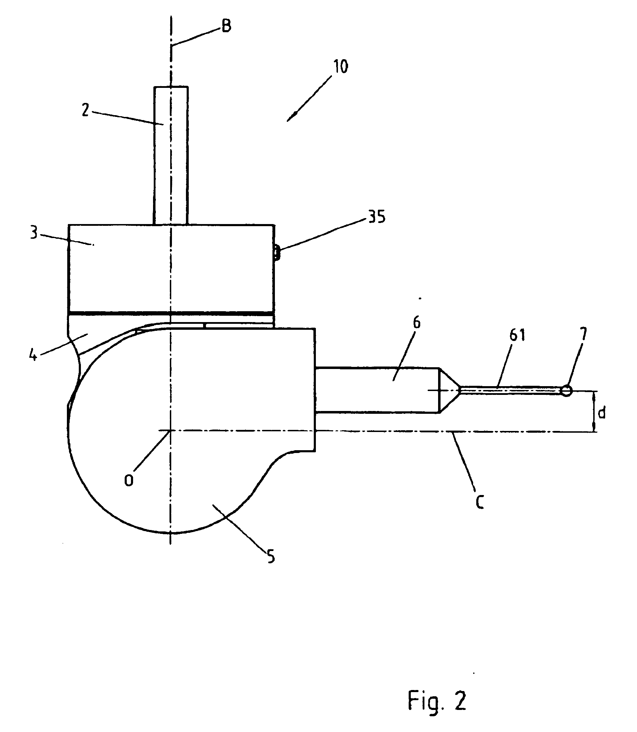

Avec référence à la figure 2, suite aux rotations autour des axes A et B, la touche 6 et la sphère 7 peuvent assumer une pluralité d'orientation dans l'espace par rapport au centre de rotation O se trouvant à l'intersection des axes A et B.

D'une manière générale, les deux axes A et B ne se croisent pas forcément dans l'espace, et le point O n'est pas toujours existant.

Selon un aspect de l'invention, la touche de palpage 6, l'axe 61 de la touche 6 et le centre de la sphère 7 ne sont pas alignés avec le second axe A, mais ils sont décalés, par exemple verticalement, d'une distance d par rapport à l'axe A du second élément mobile 5.

Les figures 2, 3 et 4 représentent une séquence de rotations permettant de modifier le décalage d de la touche de palpage 6, selon un mode de réalisation de l'invention. La figure 2 représente un palpeur selon l'invention avec la touche de palpage disposée horizontalement. La touche 6 est décalée vers le haut d'une distance d. Cette configuration est avantageuse lorsqu'il est requis de mesurer des points se situant près de la limite supérieure de l'excursion en Z de la machine à mesurer.

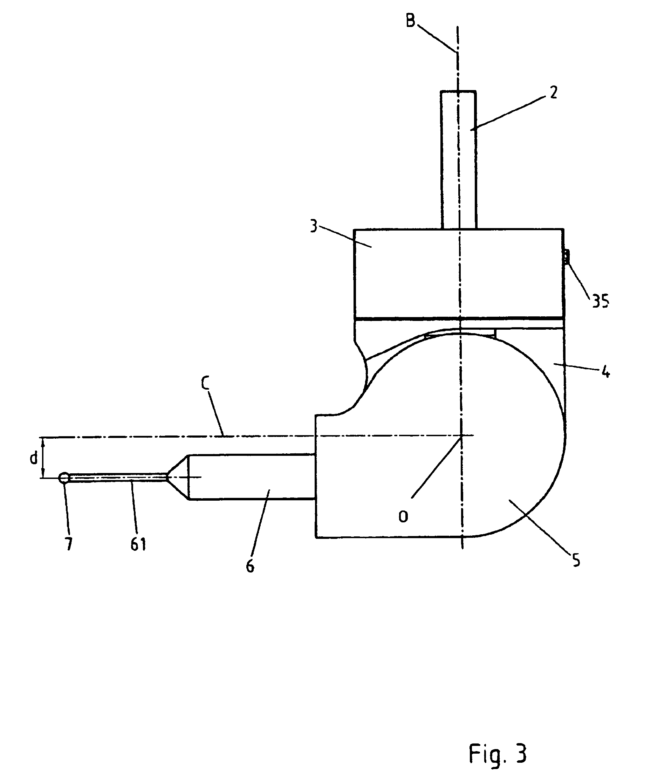

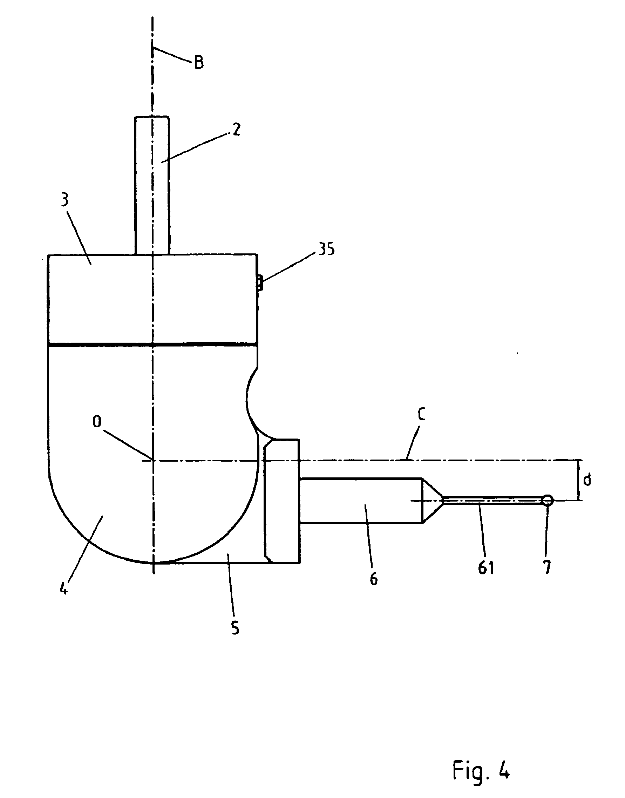

Les figures 3 et 4 représentent respectivement le palpeur après une rotation de 180 degrés selon l'axe A, a partir de la configuration de la figure 2, suivie d'une rotation de 180 degrés selon l'axe B. On peut apprécier que, à la fin de la séquence, la touche de palpage est orientée exactement dans la même direction horizontale qu'au début, mais elle est maintenant décalée d'une distance d vers le bas par rapport à l'axe A. Cette configuration permet, par exemple, d'aller mesurer des cordonnées de points situés très bas, sans que la partie inférieure du palpeur ne risque de toucher le marbre sur lequel la pièce à mesurer est posée.

Dans la configuration de la figure 4, la touche de palpage 6 se trouve translatée, par rapport à la configuration de départ de la figure 2, dans une situation symétrique, par rapport à l'axe C.

Selon le même principe on pourrait aussi partir d'une orientation oblique de la touche 6 et effectuer deux rotations, l'une selon l'axe A et la deuxième selon l'axe B pour arriver à une configuration dans laquelle le décalage de la touche est différent qu'au départ, sans que les angles d'orientation horizontal et vertical de la touche soient modifiés. En ce cas, si a est l'angle initial de la touche par rapport à la verticale, une rotation de 2α selon l'axe A suivie d'une rotation de 180 degrés selon l'axe B seront nécessaires.

Le palpeur de l'invention 10 permet donc de modifier le décalage de la touche de palpage 6 et de lui faire assumer, sans modifier son orientation, soit une position déplacée vers le haut, visible sur la figure 2, soit une positon déplacée vers le bas, visible sur la figure 4. De cette manière la course en Z utile de la machine à mesurer se retrouve augmentée d'une quantité 2d.

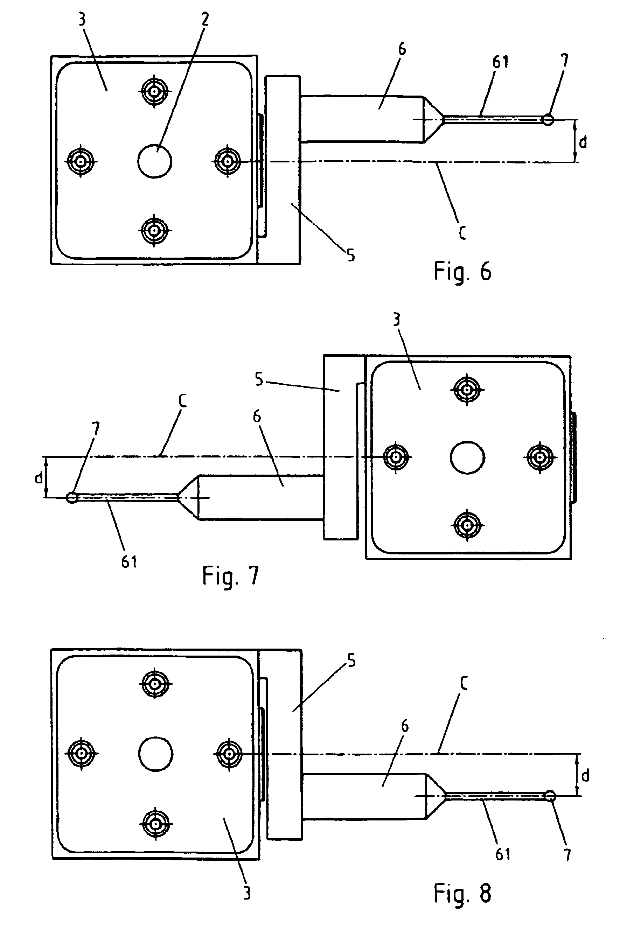

Avec référence aux figures 6, 7 et 8, le même principe peut être appliqué à une touche de palpage décalée horizontalement d'une quantité d par rapport à l'axe C et par rapport au premier axe B. La figure 6 montre un exemple de configuration de départ dans laquelle la touche 6 est décalée d'une distance d dans le sens des cordonnées Y croissants, par exemple.

Une rotation de 180 degrés selon l'axe B permet d'obtenir la configuration de la figure 7. Après une rotation ultérieure de 180 degrés selon l'axe A la touche 6 revient à son orientation initial, mais elle est maintenant décalée d'une distance d dans le sens des coordonnées Y décroissantes, comme visible sur la figure 8.

Même si les figures et les exemples montrés se réfèrent à une touche de palpage doté d'un axe de symétrie 61, parallèle à l'axe C du second élément mobile 5, la présente invention comprend aussi le cas d'une touche de palpage asymétrique ou oblique dans laquelle l'élément destiné à contacter la pièce à mesurer, par exemple la sphère 7, est décalé par rapport à l'axe C.

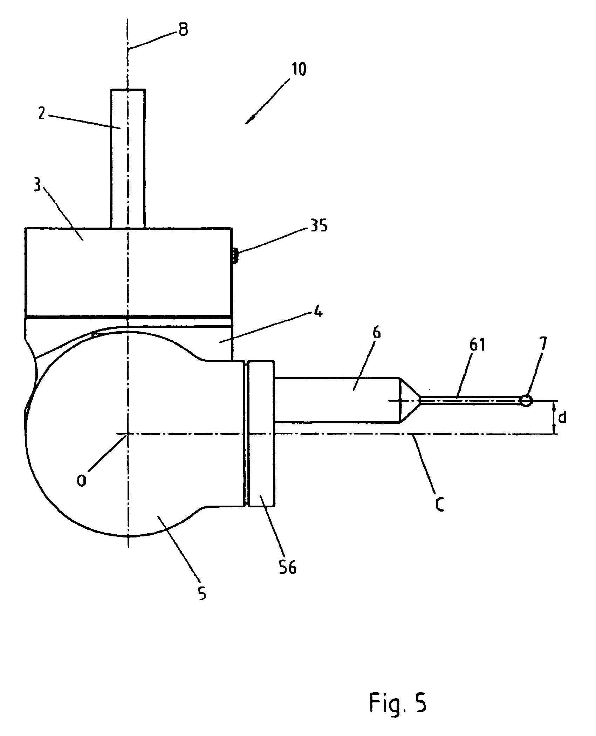

Un autre mode de réalisation de l'invention est maintenant décrit avec référence à la figure 5.

Dans le palpeur selon l'invention représenté sur la figure 5, la touche de palpage 6 est fixée à un plateau rotatif 56, lequel peut tourner autour de l'axe C. De cette manière le décalage de la touche de palpage 6 peut être modifié, par rotation du plateau 56. De préférence le plateau 56 permet un certain nombre de positions indexées, analogiquement aux éléments mobiles 4 et 5, par exemple deux positions correspondant à un décalage vertical de part et d'autre de l'axe C et deux positions correspondant à un décalage horizontal.

La rotation du plateau 56 peur être assurée par un moteur, ou un autre actuateur, directement commandé par le logiciel de la machine à mesurer, ou peut être effectuée manuellement par un opérateur.

Dans une variante non représentée de l'invention, la touche de palpage 6 est fixée à un support coulissant, pouvant glisser entre deux positions extrêmes sur l'élément mobile 5, correspondants à deux décalages différents de la touche de palpage. D'autres moyens de déplacement manuels ou motorisés sont aussi possibles et inclus dans la présente invention.

Dans une variante non représentée de l'invention, le décalage de la touche de palpage est obtenu par interposition, entre le second élément mobile 5 et la touche de palpage 6, d'un accessoire de décalage amovible. L'accessoire de décalage comprend, par exemple, un plateau tournant, de manière analogue au mode de réalisation de l'invention représenté sur la figure 5, ou un élément coulissant, pour varier le décalage.

Dans une autre variante un accessoire de décalage fixe est interposé entre le second élément mobile 5 et la touche de palpage 6. En ce cas la variation du décalage est obtenue par une composition de rotations, comme pour l'exemple représenté sur les figures 2, 3 et 4.

## Revendications

1. Palpeur orientable (10) pour orienter une touche de palpage (6) relativement à un appareil de mesure comprenant :
un élément de support (3) ;
un premier élément mobile (4) connecté audit élément de support (3) et pouvant tourner autour d'un premier axe (B) relativement audit élément de support (3) ;
un second élément mobile (5) connecté audit premier élément mobile (4) pouvant tourner autour d'un second axe (A) relativement audit premier élément mobile ;
une touche de palpage (6), de forme allongée, solidaire dudit second élément mobile (5) ;
dans lequel ladite touche de palpage (6) peut être translatée par rapport audit élément de support (3), l'axe (61) de ladite touche de palpage est décalé dudit second axe (A) d'une distance (d) non nulle, et la rotation dudit second élément mobile autour dudit second axe (A) couvre une plage angulaire supérieure à 90 degrés, préférablement non inférieure à 180 degrés.

2. Palpeur orientable (10) selon la revendication précédente, dans lequel chacun desdits premier axe (B) et second axe (A) est indexé, pour fournir un nombre fini de positions angulaires exactement reproductibles.

3. Palpeur orientable (10) selon l'une des revendications précédentes dans lequel la rotation dudit second élément mobile autour dudit second axe (A) couvre une plage angulaire non inférieure à 180 degrés, et dans lequel ladite touche de palpage (6) peut être translatée sans modifier son orientation.

4. Palpeur orientable selon l'une des revendications précédentes dans lequel ladite translation peut être obtenue par une succession de rotations desdits premier élément mobile (4) et second élément mobile (5).

5. Palpeur orientable (10) selon l'une des revendications précédentes, dans lequel le décalage de ladite touche de palpage (6) est variable.

6. Palpeur orientable selon l'une des revendications précédentes, dans lequel ledit décalage peut être varié par une succession de rotations desdits premier élément mobile (4) et second élément mobile (5).

7. Palpeur orientable selon l'une des revendications précédentes, dans lequel ledit décalage peut être varié sans changer l'orientation de ladite touche de palpage (6).

8. Palpeur orientable selon l'une des revendications précédentes, dans lequel ledit décalage peut être varié en positionnant ladite touche de palpage dans l'une de deux positions symétriques par rapport à un axe (C) dudit second élément mobile (5).

9. Palpeur orientable (10) selon l'une des revendications précédentes, dans lequel la rotation dudit second élément mobile (5) autour dudit second axe (B) couvre une plage angulaire supérieure à 120 degrés, préférablement non inférieure à 180 degrés.

10. Palpeur orientable selon l'une des revendications précédentes, comprenant un plateau tournant (56), fixé audit élément mobile d'une part et à ladite touche de palpage d'autre part.

11. Palpeur orientable selon l'une des revendications précédentes, comprenant un élément coulissant sur lequel ladite touche de palpage (6) est fixée.

12. Palpeur orientable selon l'une des revendications précédentes, comprenant un accessoire détachable interposé entre ledit second élément mobile (5) et ladite touche de palpage (6).

13. Palpeur orientable selon l'une des revendications précédentes, dans lequel ledit premier élément mobile (4) et ledit second élément mobile (5) peuvent assumer une pluralité d'orientations indexées et reproductibles.

14. Palpeur orientable selon l'une des revendications précédentes, comprenant au moins un moteur électrique pour mettre en rotation ledit premier élément mobile (4) et/ou ledit second élément mobile (5).

## Claims

1. Orientable probe (10) for orienting a probe feeler (6) relatively to a measuring apparatus, including:
a support element (3);
a first mobile element (4) connected with said support element (3) and capable of turning around a first axis (B) relatively to said support element (3);
a second mobile element (5) connected with said first mobile element (4) capable of turning around a second axis (A) relatively to said first mobile element;
a probe feeler (6), of elongated shape, united to said second mobile element (5);
wherein said probe feeler (6) can be translated relatively to said support element (3), the axis (61) of said probe feeler being shifted relatively to said second axis (A) by a distance (d) different from zero, and the rotation of said the rotation of said second mobile element around said second axis (A) covering an angular area greater than 90 degrees, preferably not less than 180 degrees.

2. Orientable probe (10) according to the preceding, wherein each of said first axis (B) and second axis (A) is indexed to supply a finite number of exactly reproducible angular positions.

3. Orientable probe (10) according to one of the preceding claims, wherein the rotation of said second mobile element around said second axis (A) covers an angular area not less than 180 degrees, and wherein said probe feeler (6) can be translated without its orientation being changed.

4. Orientable probe according to one of the preceding claims, wherein said translation can be achieved by a succession of rotations of said first mobile element (4) and second mobile element (5).

5. Orientable probe (10) according to one of the preceding claims, wherein the shift of said probe feeler (6) is variable.

6. Orientable probe according to one of the preceding claims, wherein said shift can be varied by a succession of rotations of said first mobile element (4) and second mobile element (5).

7. Orientable probe according to one of the preceding claims, wherein said shift can be varied without the orientation of said probe feeler (6) being changed.

8. Orientable probe according to one of the preceding claims, wherein said shift can be varied by positioning said probe feeler in one of two symmetric positions relatively to an axis (C) of said second mobile element (5).

9. Orientable probe (10) according to one of the preceding claims, wherein the rotation of said second mobile element (5) around said second axis (B) covers an angular area greater than 120 degrees, preferably not less than 180 degrees.

10. Orientable probe according to one of the preceding claims, including a turning plate (56) fastened to said mobile element on the one hand and to said probe feeler on the other hand.

11. Orientable probe according to one of the preceding claims, including a sliding element onto which said probe feeler (6) is fastened.

12. Orientable probe according to one of the preceding claims, including a removable implement interposed between said second mobile element (5) and said probe feeler (6).

13. Orientable probe according to one of the preceding claims, wherein said first mobile element (4) and said second mobile element (5) can take up a plurality of indexed and reproducible orientations.

14. Orientable probe according to one of the preceding claims, including at least one electric motor for putting said first mobile element (4) and/or said second mobile element (5) into rotation.

## Patentansprüche

1. Orientierbarer Messkopf (10) zum Orientieren eines Tasteinsatzes (6) in Bezug auf einen Messapparat, mit:
einem Stützelement (3);
einem ersten beweglichen Element (4), das mit dem besagten Stützelement (3) verbunden ist und das um eine erste Achse (B) in Bezug auf das besagte Stützelement (3) drehen kann;
einem zweiten beweglichen Element (5), das mit dem besagten ersten beweglichen Element (4) verbunden ist und das um eine zweite Achse (A) in Bezug auf das besagte erste bewegliche Element drehen kann;
einem Tasteinsatz (6) länglicher Form, mit dem besagten zweiten beweglichen Element (5) fest verbunden;
worin der besagte Tasteinsatz (6) in Bezug auf das besagte Stützelement (3) verlagert werden kann, die Achse (61) des besagten Tasteinsatzes (6) von der besagten zweiter Achse (A) um einen Abstand (d) ungleich Null verschoben wird, und das Drehen des besagten zweiten beweglichen Elements um die besagte zweite Achse (A) eine Winkelbereich grösser als 90 Grad, vorzugsweise nicht kleiner als 180 Grad, abdeckt.

2. Orientierbarer Messkopf (10) gemäss dem vorhergehenden Anspruch, worin jede der besagten ersten Achse (B) und zweiten Achse (A) indexiert ist, um eine endliche Anzahl von genau reproduzierbaren Winkelpositionen zu liefern.

3. Orientierbarer Messkopf (10) gemäss einem der vorhergehenden Ansprüche, worin das Drehen des zweiten beweglichen Elements um die besagte zweite Achse (A) eine Winkelfläche nicht kleiner als 180 Grad abdeckt, und worin der besagte Tasteinsatz (6) verschoben werden kann, ohne seine Orientierung zu ändern.

4. Orientierbarer Messkopf gemäss einem der vorhergehenden Ansprüche, worin die besagte Verschiebung durch eine Folge von Drehungen des besagten ersten beweglichen Elements (4) und des besagten zweiten beweglichen Elements (5) erreicht werden kann.

5. Orientierbarer Messkopf (10) gemäss einem der vorhergehenden Ansprüche, worin die Verlagerung des besagten Tasteinsatzes (6) variabel ist.

6. Orientierbarer Messkopf gemäss einem der vorhergehenden Ansprüche, worin die besagte Verlagerung durch eine Folge von Drehungen des besagten ersten beweglichen Elements (4) und des besagten zweiten beweglichen Elements (5) variiert werden kann.

7. Orientierbarer Messkopf gemäss einem der vorhergehenden Ansprüche, worin die besagte Verlagerung variiert werden kann, ohne die Orientierung des besagten Tasteinsatzes (6) zu ändern.

8. Orientierbarer Messkopf gemäss einem der vorhergehenden Ansprüche, worin die besagte Verlagerung variiert werden kann, indem der besagte Tasteinsatz in einer von zwei in Bezug auf eine Achse (C) des besagten zweiten beweglichen Elements (5) symmetrischen Positionen positioniert wird.

9. Orientierbarer Messkopf (10) gemäss einem der vorhergehenden Ansprüche, worin das Drehen des besagten zweiten beweglichen Elements (5) um die besagte zweite Achse (B) eine Winkelfläche grösser als 120 Grad, vorzugsweise nicht weniger als 180 Grad, abdeckt.

10. Orientierbarer Messkopf gemäss einem der vorhergehenden Ansprüche, mit einer Drehplatte (56), die mit dem besagten beweglichen Element einerseits und mit dem besagten Tasteinsatz andererseits befestigt ist.

11. Orientierbarer Messkopf gemäss einem der vorhergehenden Ansprüche, mit einem Gleitelement, auf welchem der besagte Tasteinsatz (6) befestigt ist.

12. Orientierbarer Messkopf gemäss einem der vorhergehenden Ansprüche, mit einem abnehmbaren, zwischen dem besagten zweiten beweglichen Element (5) und dem besagten Tasteinsatzes (6) zwischengestellten Zubehörteil.

13. Orientierbarer Messkopf gemäss einem der vorhergehenden Ansprüche, worin das besagte erste bewegliche Element (4) und das besagte zweite bewegliche Element (5) eine Vielzahl von indexierten und reproduzierbaren Orientierungen einnehmen können.

14. Orientierbarer Messkopf gemäss einem der vorhergehenden Ansprüche, mit mindestens einem Elektromotor, um das besagte erste bewegliche Element (4) und/oder das besagte zweite bewegliche Element (5) in Drehung zu versetzen.
